# EUROPEAN PATENT APPLICATION

(11) **EP 4 729 761 A1**
(43) Date of publication of application: **22.04.2026**
(21) Application number: 25209903.1
(22) Date of filing: 20.10.2025
(51) Int. Cl.: F02C 7/22, F01D 21/00, F02C 9/26, F02C 9/46

(54) **FUEL METERING VALVE PERFORMANCE SHIFT CHECK**

(30) Priority: 18.10.2024 US 202418920282
(71) Applicant: PRATT & WHITNEY CANADA CORP., Longueuil, Québec J4G 1A1 (CA)
(72) Inventor: SAINTIGNAN, Cedric, (01BE5) Longueuil, J4G 1A1 (CA); JARVO, James, (01BE5) Longueuil, J4G 1A1 (CA); MOKHTAR, Hytham, (01BE5) Longueuil, J4G 1A1 (CA); ZINGARO, Giancarlo, (01BE5) Longueuil, J4G 1A1 (CA); PONTARELLI, Robert, (01BE5) Longueuil, J4G 1A1 (CA)
(74) Representative: Dehns

(57) **Abstract**

A method includes controlling a fuel pump (104) to pump fuel through an inlet of a fuel metering valve, FMV, (300), commanding the FMV (300) to open a metering window of the FMV (300) a controllable increment beyond an edge of the metering window, and checking for a presence of fuel downstream from a discharge of the FMV (300).

## Description

### TECHNICAL FIELD

This disclosure generally relates to fuel delivery systems. More specifically, this disclosure relates to a fuel metering valve performance shift check function.

### BACKGROUND

Fuel systems, for example for a gas turbine engine, may include a fuel metering valve. The fuel metering valve may be configured to deliver a particular fuel volume in response to a command. Over time, the performance of the fuel metering valve may degrade such that the fuel metering valve does not deliver sufficient fuel when commanded to deliver a particular fuel volume.

### SUMMARY

This disclosure relates to a fuel metering valve performance shift check function.

In an aspect of the invention, a method includes controlling a fuel pump to pump fuel through an inlet of a fuel metering valve (FMV), commanding the FMV to open at least one metering window of the FMV a controllable increment beyond an edge of the at least one metering window, and checking for a presence of fuel downstream from a discharge of the FMV.

Any single one or any combination of the following features may be used with the examples above.

In any of the aspects or embodiments described above or herein, commanding the FMV to open the at least one metering window of the FMV may include applying a specific amount of electrical current to a control input of the FMV. In any of the aspects or embodiments described above or herein, applying the specific amount of electrical current to the control input may cause a piston of the FMV to change positions. In any of the aspects or embodiments described above or herein, the specific amount of electrical current may correspond with a command for a minimum flow of fuel through the at least one metering window. In any of the aspects or embodiments described above or herein, a combustor of a gas turbine engine may be configured to receive fuel downstream from a discharge of the FMV. In any of the aspects or embodiments described above or herein, the gas turbine engine may be shut down while performing the method (the method may include shutting down the gas turbine engine while performing the steps of controlling the fuel pump, commanding the FMV and/or checking for the presence of fuel). In any of the aspects or embodiments described above or herein, checking for the presence of fuel may include performing an inspection for a presence of fuel in the combustor. In any of the aspects or embodiments described above or herein, an inspection point may be configured to receive fuel downstream from a discharge of the FMV. In any of the aspects or embodiments described above or herein, checking for the presence of fuel may include performing an inspection for a presence of fuel at the inspection point.

In another aspect of the invention, a system (e.g., a system for preforming the method of any of the aspects or embodiments described above or herein) includes an FMV including an inlet, a discharge, a drain, and at least one metering window. The system also includes a fuel pump configured to pump fuel through the inlet of the FMV, and a controller. The controller is configured to receive a command to initiate a fuel presence check process, and in response to receiving the command, control the fuel pump to pump fuel through the inlet of the FMV, and command the FMV to open the at least one metering window of the FMV a controllable increment beyond an edge of the at least one metering window.

Any single one or any combination of the following features may be used with the examples above.

In any of the aspects or embodiments described above or herein, to command the FMV to open the at least one metering window of the FMV, the controller may be configured to cause application of a specific amount of electrical current to a control input of the FMV. In any of the aspects or embodiments described above or herein, application of the specific amount of electrical current to the control input may cause a piston of the FMV to change positions. In any of the aspects or embodiments described above or herein, the specific amount of electrical current may correspond with a command for a minimum flow of fuel through the at least one metering window. In any of the aspects or embodiments described above or herein, the system may include a gas turbine engine including a combustor. In any of the aspects or embodiments described above or herein, the combustor may be configured to receive fuel downstream from the discharge. In any of the aspects or embodiments described above or herein, the gas turbine engine may be shut down during the fuel presence check process. In any of the aspects or embodiments described above or herein, the fuel presence check process may include an inspection for a presence of fuel in the combustor. In any of the aspects or embodiments described above or herein, the system may include an inspection point configured to receive fuel downstream from the discharge. In any of the aspects or embodiments described above or herein, the fuel presence check process may include an inspection for a presence of fuel at the inspection point.

In another aspect of the invention, a non-transitory machine readable medium includes instructions (e.g., instructions for performing the method of any of the aspects or embodiments described above or herein) that when executed cause at least one processor to receive a command to initiate a fuel presence check process, and in response to receiving the command, control a fuel pump to pump fuel through an inlet of an FMV, and command the FMV to open at least one metering window of the FMV a controllable increment beyond an edge of the metering window.

Any single one or any combination of the following features may be used with the examples above.

In any of the aspects or embodiments described above or herein, to command the FMV to open the at least one metering window, the instructions when executed may cause the at least one processor to apply a specific amount of electrical current to a control input of the FMV. In any of the aspects or embodiments described above or herein, application of the specific amount of electrical current to the control input may be configured to cause a piston of the FMV to change positions. In any of the aspects or embodiments described above or herein, the specific amount of electrical current may correspond with a command for a minimum flow of fuel through the at least one metering window. In any of the aspects or embodiments described above or herein, a combustor of a gas turbine engine may be configured to receive fuel downstream from a discharge of the FMV (a system may include the non-transitory machine readable medium according to any aspects or embodiments described above or herein, at least one processor, the FMV and a gas turbine engine which may be configured to receive fuel downstream from a discharge of the FMV). In any of the aspects or embodiments described above or herein, the gas turbine engine may be configured to be shut down during the fuel presence check process (the instructions when executed may cause the at least one processor to shut down the gas turbine engine during the fuel presence check process). In any of the aspects or embodiments described above or herein, the fuel presence check process may include an inspection for a presence of fuel in the combustor (the fuel presence check process may include an inspection for a presence of fuel in a combustor of a gas turbine engine, the combustor configured to receive fuel downstream from a discharge of the FMV). In any of the aspects or embodiments described above or herein, an inspection point may be configured to receive fuel downstream from a discharge of the FMV. In any of the aspects or embodiments described above or herein, the fuel presence check process may include an inspection for a presence of fuel at the inspection point (the fuel presence check process may include an inspection for a presence of fuel at an inspection point configured to receive fuel downstream from a discharge of the FMV).

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates a schematic view of an example fuel delivery system in accordance with this disclosure;
FIGURE 2 illustrates a graph of an example current-to-fuel flow relationship 200 for an FMV in accordance with this disclosure;
FIGURES 3A-3E illustrate operation of an FMV in accordance with this disclosure; and
FIGURE 4 illustrates a flowchart for an example method for a fuel metering valve performance shift check in accordance with this disclosure.

### DETAILED DESCRIPTION

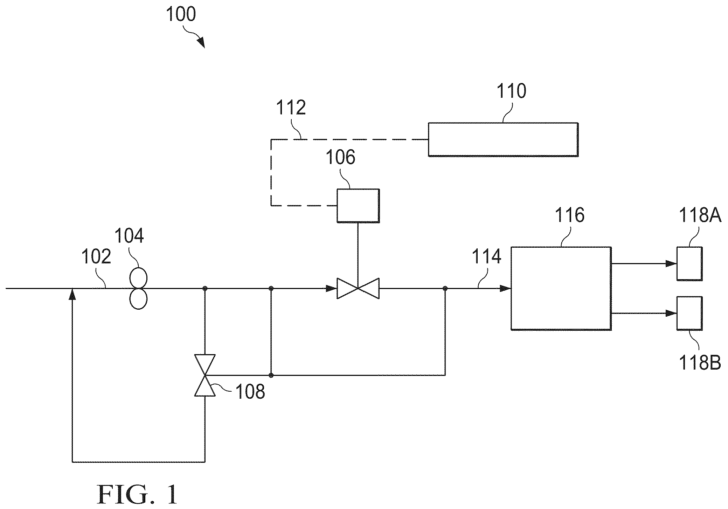

FIGURES 1 through 4, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

An aircraft engine such as a gas turbine engine may utilize a fuel delivery system to deliver fuel to the engine at a proper delivery rate and fuel pressure. For example, a fuel delivery system for an aircraft engine may include a fuel metering valve (FMV). It is desirable to confirm that an FMV is operating within the necessary performance range. For instance, the performance of the fuel metering valve may be crucial to the performance of the engine and the safety of the aircraft, particularly for a multiengine aircraft in a one engine inoperative (OEI) scenario. During an OEI event, the remaining engine(s) must operate at higher (potentially maximum) power to make up for the loss of the inoperative engine. However, over time the performance of an engine's FMV may degrade, and the FMV may be unable to deliver sufficient fuel flow to the operating engine(s) to safely operate the aircraft in an OEI scenario. Proper performance of the FMV may also reduce the likelihood of hung or hot starts of the engine. The present disclosure provides methods to check for a shift in performance of an FMV.

FIGURE 1 illustrates a schematic view of an example fuel delivery system 100 in accordance with this disclosure. For example, fuel delivery system 100 may be a fuel delivery system for an aircraft. The aircraft supported by fuel delivery system 100 may be a multi engine aircraft. The engine(s) of the aircraft may be one or more gas turbine engines that include a combustor. Fuel delivery system 100 includes a fuel pump 104 that receives fuel from a fuel flow 102. For example, fuel flow 102 may be fuel received from a fuel tank that may, for example, be combined with excess fuel received from bypass valve 108. Fuel delivery system 100 also includes a fuel metering valve (FMV) 106 that receives fuel from fuel pump 104 during operation. FMV 106 receives an input signal (such as an electric current or encoded command) 112 from an Engine Electronic Control (EEC) 110. The input signal 112 controls the output burn fuel flow 114 from FMV 106. During operation, bypass valve 108 diverts excess fuel back to fuel flow 102. Output burn fuel flow 114 may optionally flow into a flow divider 116, or directly to one or more fuel manifolds with one or more fuel nozzles. For instance, in the example of FIGURE 1, output burn fuel flow 114 is divided by flow divider 116 into two separate flows, one flow to a first fuel manifold 118A with one or more fuel nozzles, and a second fuel manifold 118B with one or more fuel nozzles. However, in some embodiments fuel delivery system 100 may not include a flow divider 116, and output burn fuel flow 114 may flow directly to one or more of fuel manifolds 118A and/or 118B. Fuel manifolds 118A and 118B may for example, provide fuel to a combustor of a gas turbine engine.

Although FIGURE 1 illustrates one example of a fuel delivery system 100, various changes may be made to FIGURE 1. For example, while illustrated as including a first and a second fuel manifold, fuel delivery system 100 may include any number of fuel manifolds. Additionally, fuel delivery system 100 may be expanded to include additional fuel pumps, FMVs, bypass valves, etc. according to particular needs.

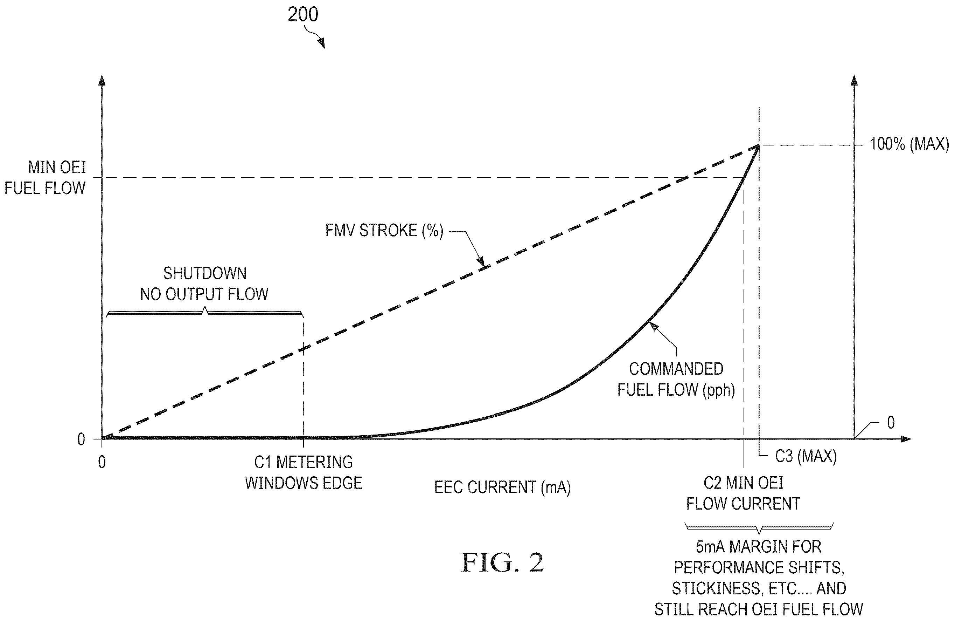

As previously described herein, an FMV such as FMV 106 is designed to operate within a certain performance range. An example of such a performance range can be seen in FIGURE 2, where the input command to the FMV is an input electric current.

FIGURE 2 illustrates a graph of an example current-to-fuel flow relationship 200 for an FMV in accordance with this disclosure. The graph of FIGURE 2 shows the expected fuel flow from an FMV such as FMV106 when commanded according to a particular input current, e.g., input signal 112 commanded from EEC 110. For example, EEC 110 may command the particular amount of input signal 112 according to the present fuel need determined by EEC 110. As shown in FIGURE 2, when the FMV receives an input electric current from 0 to C1, a piston of the FMV should be positioned such that zero fuel should flow, and as the FMV receives an input current between C1 and C3, the piston should be positioned such that the flow of fuel should match the curve. In the example of FIGURE 2, C2 represents a current to command the FMV to provide the minimum flow necessary for an OEI event in some embodiments, providing a C3-C2 margin to allow for performance shifts in the FMV. In other embodiments, the margin may be unnecessary, as checking FMV performance before every engine start may obviate necessity of an operating margin. In the example of FIGURE 2, providing the FMV with a current larger than C3 is not supported, as additional current may, for example, exceed the output capability of the EEC, or may cause damage to the FMV.

Although FIGURE 2 illustrates one example current-to-fuel flow relationship 200 for an FMV, various changes may be made to FIGURE 2. For example, while FIGURE 2 shows an operating range of 0 to C3 input current, an FMV may support a different range of input current. Additionally, while FIGURE 2 shows output fuel flow is shutdown at an input current of C1 or below, an FMV may support shutdown of fuel flow at a higher or lower input current. Furthermore, while FIGURE 2 illustrates a current-to-fuel flow relationship, the FMV may be controlled by another method, such as a coded signal (e.g., pulse width modulation), a voltage-to-fuel flow relationship, etc.

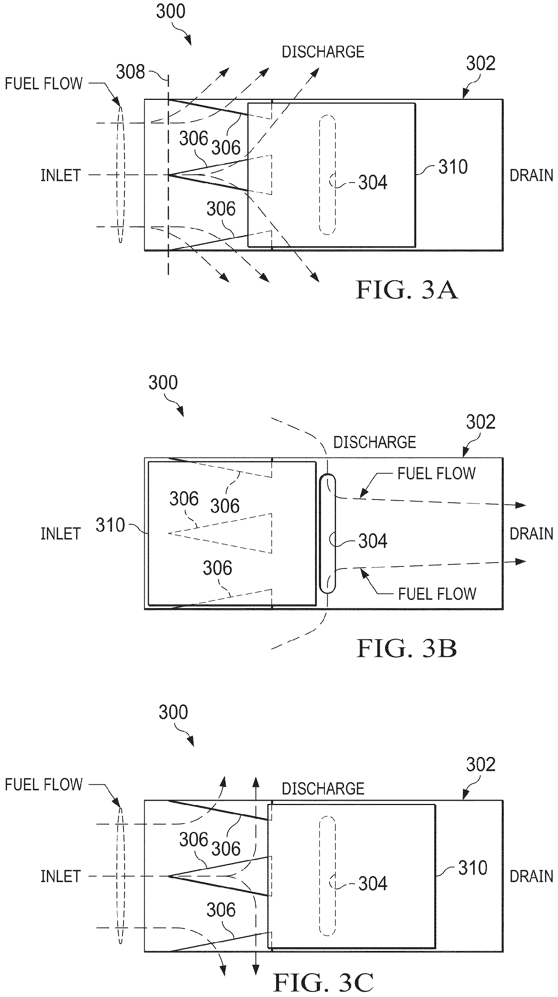

FIGURES 3A-3E illustrates operation of an FMV 300 in accordance with this disclosure. FIGURES 3A-3E show the second stage of an FMV operating according to different input currents. For example, FMV 300 may be similar to FMV 106 of FIGURE 1. In the example of FIGURES 3A-3E, FMV 300 is illustrated as operating according to current-to-fuel flow relationship 200 shown in FIGUERE 2. As can be seen in FIGURES 3A-3E, FMV 300 includes a sleeve 302, a drain window 304, metering windows 306, a metering windows edge 308, and a piston 310.

FIGURE 3A illustrates FMV 300 where piston 310 is commanded to an intermediate position. During the intermediate position, fuel flows from the inlet through the controlled open area of metering windows 306 to the discharge of FMV 300. A bypass valve such as bypass valve 108 of FIGURE 1 may regulate the delta pressures across metering windows 306 to be approximately constant.

FIGURE 3B illustrates FMV 300 where FMV 300 is receiving an input (e.g. between 0 and C1 as illustrated in FIGURE 2), which commands piston 310 to 0% stroke. In this position, metering windows 306 are closed, and any fuel in the discharge of FMV 300 is allowed to flow through drain window 304 to the drain of FMV 300.

FIGURE 3C illustrates FMV 300 where FMV 300 is receiving a maximum rated input (e.g., C3 as illustrated in FIGURE 2) which commands piston 310 to 100% stroke (also referred to as full stroke). In this position, metering windows 306 are wide open where a minimum OEI full flow is ensured during normal operation of FMV 300.

As previously described herein, the performance of an FMV such as FMV 300 may shift or degrade over time. For example, piston 310 may become sticky and fail to position properly according to the input current. In another example, the position of piston 310 may become shifted such that piston 310 cannot achieve full stroke. Such a shift may be referred to as the piston (or the FMV) having shifted low. In these circumstances, an FMV such as FMV 300 may be unable to deliver sufficient fuel to meet a minimum OEI full flow.

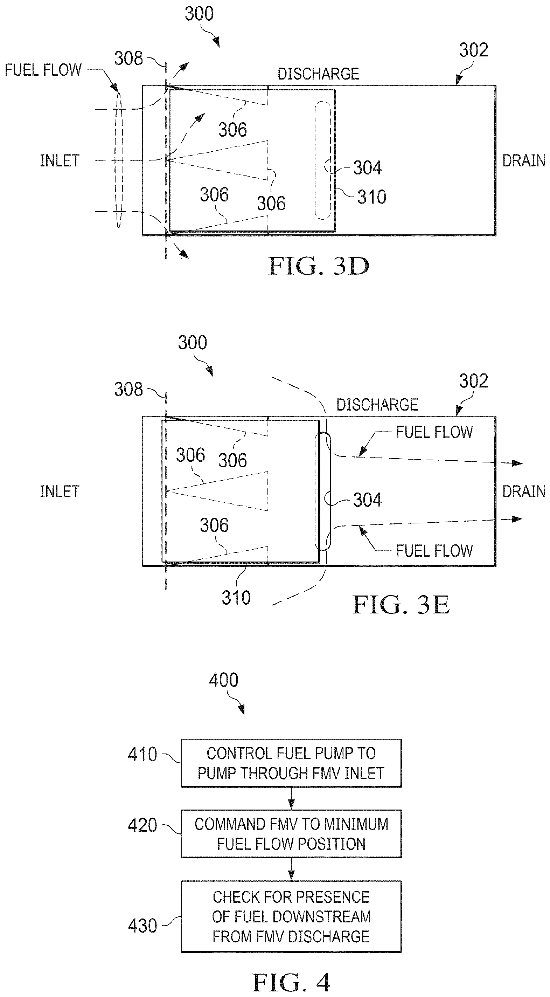

FIGURE 3D illustrates FMV 300 where FMV 300 is operating within design parameters and is receiving an input just above the fuel cutoff point (e.g., a minimum control increment above C1 as illustrated in FIGURE 2) which commands piston 310 a controllable increment past metering windows edge 308. In this position, metering windows 306 are open enough to allow a minimum amount of fuel to flow from the inlet through metering windows 306 to the discharge of FMV 300. In some embodiments, the controllable increment may be a minimum controllable increment. As described herein, a minimum control increment refers to the resolution of a control signal permitted by a control system. For example, if the control system is able to output a control signal with a resolution of 0.1 milliamps, and is currently outputting a 10 milliamp signal, a minimum control increment above the 10 milliamp signal would be 10.1 milliamps. As described herein, a minimum controllable increment refers to the reaction of a component in response to a minimum control increment of a control signal. With respect to the examples of FIGURES 3A-3E, a minimum controllable increment refers to an increment piston 310 moves in response to a minimum control increment.

FIGURE 3E illustrates FMV 300 where piston 310 has shifted low and is receiving an identical input current to the input current of FIGURE 3D. Because piston 310 has shifted low, piston 310 has not passed metering windows edge 308 and no fuel may flow from the inlet through metering windows 306 to the discharge. In the example of FIGURE 3E, the shift low also allows a partial opening of drain window 304 such that fuel is able to flow from the discharge through drain window 304 into the drain of FMV 300. In this circumstance, FMV 300 should be serviced or replaced.

Although FIGURES 3A-3E illustrate one example of operation of an FMV 300, various changes may be made to FIGURES 3A-3E. For example, while FIGURE 3 shows FMV 300 operating in a particular manner according to different inputs, FMV 300 could have a different input response profile. Furthermore FMV 300 could have an opposite flow direction, different shape, different metering window profile, etc.

As previously described herein it is desirable to confirm that an FMV is operating within the necessary performance range. However, such a check is difficult while the engine is operating. For example, operating an engine at full OEI fuel flow could create a hazard while an aircraft is on the ground for service, and creates substantial fuel pressure on the fuel line. FIGURE 4 provides an engine off procedure for checking that an FMV such as FMV 300 has not shifted low.

FIGURE 4 illustrates a flowchart for an example method 400 for a fuel metering valve performance shift check in accordance with this disclosure. For example, method 400 may be performed as part of a maintenance routine for an aircraft that includes a fuel delivery system similar as described regarding fuel delivery system 100 of FIGURE 1 and at least one gas turbine engine. For ease of explanation, the method 400 shown in FIGURE 4 may be described as being implemented or supported using a controller. However, the method 400 shown in FIGURE 4 may be implemented or supported by any suitable device(s) and in any suitable system(s).

In the example of FIGURE 4, method 400 begins at step 410. At step 410, a fuel pump, such as fuel pump 104 of FIGURE 1 is controlled to pump fuel through an inlet of an FMV such as FMV 106 of FIGURE 1 or FMV 300 of FIGURE 3. For example, a technician may enter a command in a control system of the aircraft that initiates a fuel presence check process. The command may cause the aircraft to activate the fuel pump at a low flow rate.

At step 420, the FMV is commanded to a minimum fuel flow position. That is to say, the FMV is commanded to open a metering window of the FMV a controllable increment (e.g., a minimum controllable increment) beyond an edge of the metering window, similar as shown in FIGURE 3D. For example, the command that initiates the fuel presence check process may cause a specific amount of electrical current to be applied to a control input of the FMV. The specific amount of electrical current may correspond with a command for a minimum flow of fuel through the metering window for a well calibrated FMV. Applying the specific amount of electrical current to the control input commands a piston of the FMV to change positions to a minimum fuel flow position.

At step 430, a check for presence of fuel is performed downstream from a discharge of the FMV. For example, a technician may check for presence of fuel in a combustor of the gas turbine engine. If the FMV has not shifted low, fuel should flow from the FMV downstream into the fuel delivery system (e.g., output burn flow 114 of FIGURE 1) at step 420. A visual inspection of the combustor may confirm presence of fuel within the combustor, or the technician may perform a "smell test" to identify that fuel is present within the combustor. In another example, the fuel delivery system may include an inspection point. For example, flow divider 116 of FIGURE 1 may include an inspection window through which fuel flow may be visible, or a maintenance drain valve that can drain fuel from the flow divider. In such examples, the technician may visually observe fuel flow through the inspection window, or the technician may open the maintenance drain valve and verify fuel is present in the flow divider or anywhere downstream of the FMV discharge. In another example, the fuel delivery system may include a flow meter downstream from the FMV discharge, and the flow meter may detect the fuel presence.

If fuel is present downstream from the discharge of the FMV, it can be assumed that the FMV has not shifted low, and will likely be able to provide a minimum OEI fuel flow. If no fuel is present downstream from the discharge of the FMV, it can be assumed that the FMV shifted low, similar as shown in FIGURE 3E, and the FMV should be serviced or replaced.

Although FIGURE 4 illustrates one example of a method 400 for a fuel metering valve performance shift check, various changes may be made to FIGURE 4. For example, while shown as a series of steps, various steps in FIGURE 4 could overlap, occur in parallel, occur in a different order, occur any number of times, be omitted, or be replaced by other steps.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A method comprising:
controlling a fuel pump (104) to pump fuel through an inlet of a fuel metering valve, FMV (300);
commanding the FMV (300) to open at least one metering window (306) of the FMV (300) a controllable increment beyond an edge (308) of the at least one metering window (306); and
checking for a presence of fuel downstream from a discharge of the FMV (300).

2. The method of Claim 1, wherein commanding the FMV (300) to open the at least one metering window (306) of the FMV (300) comprises applying a specific amount of electrical current to a control input of the FMV (300).

3. The method of Claim 2, wherein:
applying the specific amount of electrical current to the control input causes a piston (310) of the FMV (300) to change positions; and/or
the specific amount of electrical current corresponds with a command for a minimum flow of fuel through the at least one metering window (306).

4. The method of any preceding Claim, wherein:
a combustor of a gas turbine engine is configured to receive fuel downstream from a discharge of the FMV (300); and
the method includes shutting down the gas turbine engine while performing the step of checking for the presence of fuel,
wherein, optionally, checking for the presence of fuel comprises performing an inspection for a presence of fuel in the combustor.

5. The method of any preceding Claim, wherein:
an inspection point is configured to receive fuel downstream from a discharge of the FMV (300); and
checking for the presence of fuel comprises performing an inspection for a presence of fuel at the inspection point.

6. A system comprising:
a fuel metering valve, FMV, (300) including an inlet, a discharge, a drain (304), and at least one metering window (306);
a fuel pump (104) configured to pump fuel through the inlet of the FMV (300); and
a controller configured to:
receive a command to initiate a fuel presence check process; and
in response to receiving the command:
control the fuel pump (104) to pump fuel through the inlet of the FMV (300); and
command the FMV (300) to open the at least one metering window of the FMV (300) a controllable increment beyond an edge of the at least one metering window (306).

7. The system of Claim 6, wherein to command the FMV (300) to open the at least one metering window (306) of the FMV (300), the controller is configured to cause application of a specific amount of electrical current to a control input of the FMV (300).

8. The system of Claim 7, wherein:
application of the specific amount of electrical current to the control input is configured to cause a piston (310) of the FMV (300) to change positions; and/or
the specific amount of electrical current corresponds with a command for a minimum flow of fuel through the at least one metering window (306).

9. The system of Claim 6, 7 or 8, further comprising:
a gas turbine engine including a combustor, the combustor configured to receive fuel downstream from the discharge, wherein, optionally:
the controller is configured to shut down the gas turbine engine during the fuel presence check process; and
the fuel presence check process includes an inspection for a presence of fuel in the combustor.

10. The system of any of Claims 6 to 9, further comprising:
an inspection point configured to receive fuel downstream from the discharge, wherein the fuel presence check process includes an inspection for a presence of fuel at the inspection point.

11. A non-transitory machine readable medium containing instructions that, when executed, cause at least one processor to:
receive a command to initiate a fuel presence check process; and
in response to receiving the command:
control a fuel pump (104) to pump fuel through an inlet of a fuel metering valve, FMV (300); and
command the FMV (300) to open at least one metering window (306) of the FMV (300) a controllable increment beyond an edge of the at least one metering window (306).

12. The non-transitory machine readable medium of Claim 11, wherein, to command the FMV (300) to open the at least one metering window (306), the instructions when executed cause the at least one processor to apply a specific amount of electrical current to a control input of the FMV (300).

13. The non-transitory machine readable medium of Claim 12, wherein:
application of the specific amount of electrical current to the control input is configured to cause a piston (310) of the FMV (300) to change positions; and/or
the specific amount of electrical current corresponds with a command for a minimum flow of fuel through the at least one metering window (306).

14. The non-transitory machine readable medium of Claim 11, 12 or 13, wherein:
the instructions when executed cause the at least one processor to shut down a gas turbine engine during the fuel presence check process; and
the fuel presence check process includes an inspection for a presence of fuel in a combustor of the gas turbine engine, the combustor configured to receive fuel downstream from a discharge of the FMV (300).

15. The non-transitory machine readable medium of any of Claims 11 to 14, wherein the fuel presence check process includes an inspection for a presence of fuel at an inspection point configured to receive fuel downstream from a discharge of the FMV (300).
